**Europäisches Patentamt**

**European Patent Office**

**Office européen des brevets**

(19)

(11) Veröffentlichungsnummer: **0 309 450 B1**

(12) **EUROPÄISCHE PATENTSCHRIFT**

(45) Veröffentlichungstag der Patentschrift:
08.05.91 Patentblatt 91/19

(51) Int. Cl.⁵ : **F16K 31/06, F02M 51/08,** G01N 30/20

(21) Anmeldenummer: 87902421.4

(22) Anmeldetag : 06.05.87

(86) Internationale Anmeldenummer:
PCT/DE87/00200

(87) Internationale Veröffentlichungsnummer:
WO 87/07351 03.12.87 Gazette 87/27

(54) **MIKROVENTILANORDNUNG.**

(30) Priorität : 31.05.86 DE 3618380

(43) Veröffentlichungstag der Anmeldung :
05.04.89 Patentblatt 89/14

(45) Bekanntmachung des Hinweises auf die
Patenterteilung :
08.05.91 Patentblatt 91/19

(84) Benannte Vertragsstaaten :
DE FR GB IT SE

(56) Entgegenhaltungen :
DE-A- 1 933 909
DE-A- 2 312 489
DE-A- 2 756 157
GB-A-21 551 52
US-A- 4 538 642
US-A-40 279 83

(73) Patentinhaber : ROBERT BOSCH GMBH
Postfach 50
W-7000 Stuttgart 1 (DE)

(72) Erfinder : GROTHKOPP, Bernd
Tuttlinger Str. 31
W-7250 Leonberg (DE)

## Beschreibung

### Stand der Technik

Die Erfindung geht aus von einer Mikroventilanordnung nach der Gattung des Hauptanspruchs und einem Verfahren zum Betreiben der Anordnung.

Ein Mikroventil ist bekannt aus der Fachzeitschrift "Spektrum der Wissenschaft". Juni 1983. S. 38-50. Das beschriebene Mikroventil ist vorgesehen für die Verwendung in einem Miniatur-Gaschromatographen. Die Ventilstruktur ist hergestellt durch Oberflächenbearbeitung auf einem Siliziumkörper. Zwei Ventilkammern, in die Ein- und Auslässe münden, sind durch Dichtringe voneinander getrennt. Die Abdichtung der Ventilkammern gegeneinander erfolgt durch eine flexible Teflon-Membran, die von einem Elektromagneten bewegt wird. Die gesamte Ventilkontruktion beansprucht eine Fläche von weniger als 1 mm² auf dem Siliziumkörper. Mit dem bekannten Mikroventil ist nur ein geringer Mengendurchsatz pro Zeiteinheit bei geöffnetem Ventil erreichbar. Der Mengendurchsatz wird begrenzt durch den geringen Querschnitt für das strömende Medium.

Aus der DE-A-27 56 157 ist eine Ventilanordnung bekannt, die von einem herkömmlichen Ventilaufbau abgeleitet ist, der anschließend miniaturisiert wurde. Dieses Ventil ist aus mehreren Ventilen zusammengesetzt, wobei die Schließglieder der Ventile gemeinsam von einem Elektromagneten betätigt werden. Die Ventilanordnung ist aus verschiedenen Platten zusammengesetzt, die mittels Schrauben zusammengehalten werden. Die mit dieser bekannten Ventilanordnung erreichbare Ventildichte pro Flächeneinheit ist begrenzt.

Aus der US-A-45 38 642 ist eine Mikroventilanordnung bekannt, bei der die Auslässe der Ventile aus einem Stück eines elektrisch leitfähigen Materials herausgearbeitet sind. Dieses Teil wirkt mit einem anderen elektrisch leitfähigen Teil zusammen, in dem die Einlaßöffnungen der Ventile vorgesehen sind. Die beiden elektrisch leitfähigen Teile sind von einer Isolierschicht getrennt, die gleichzeitig die Dichtung der einzelnen Ventile bildet. Die bekannte Mikroventilanordnung wird dadurch geöffnet, daß in den beiden elektrisch leitenden Teilen jeweils ein Stromfluß erzeugt wird, wobei die Stromrichtung derart vorgegeben ist, daß eine abstoßende Kraft entsteht, die die beiden elektrisch leitfähigen Teile voneinander trennt. Der mehrschichtige Aufbau der bekannten Mikroventilanordnung verteuert die Herstellungskosten.

Der Erfindung liegt die Aufgabe zugrunde, eine Mikroventilanordnung anzugeben, die einfach in der Herstellung ist und die einen bestimmten Mengendurchsatz innerhalb einer vorgegeben Zeit erreicht.

Die Aufgabe wird durch die im Hauptanspruch angegebenen Merkmale gelöst.

### Vorteile der Erfindung

Die erfindungsgemäße Mikroventilanordnung weist zunächst den Vorteil einer einfachen Herstellung dadurch auf, daß Einlaß, Auslaß und Ventilsitz durch Oberflächenbearbeitung eines Trägermaterials hergestellt sind. Ferner ist ein großer Mengendurchsatz pro Zeiteinheit mit einer präzisen zeitlichen Steuerung durch einen Elektromagneten gegeben. Die Wicklung des Elektromagneten ist ebenfalls durch Oberflächenbearbeitung des Trägermaterials hergestellt.

Die Verwendung von mehreren Ventilen erhöht die Ausfallsicherheit der Ventilanordnung, da der Ausfall von einzelnen Ventilen nicht gleich den Gesamtausfall der Anordnung zur Folge hat. Ferner ist eine örtlich variable Mengensteuerung vornehmbar.

Die Ventilanordnung ist besonders geeignet für eine Massenfertigung, bei der eine gleichbleibend hohe Genauigkeit der mechanischen bemessungen durch die Integrationstechnik gewährleistet ist.

Durch die in den Unteransprüchen aufgeführten Maßnahmen sind vorteilhafte Weiterbildungen und Verbesserungen der im Hauptanspruch angegebenen Mikroventilanordnung möglich.

Bei der Verwendung von Silizium als Trägermaterial ist die Integration der elektrischen besteuerung für die Elektromagnete in besonders einfacher Weise möglich.

Ferner ist es ein Vorteil, daß nur geringe Massen bewegt werden. Die erfindungsgemäße Mikroventilanordnung eignet sich deshalb besonders für den Einsatz bei schnellen Stellern, wie sie beispielsweise bei einem Antiblockiersystem für Kraftfahrzeugbremsen benötigt werden.

Einer weitere Anwendungsmöglichkeit ist die Varwendung der Ventilanordnung bei Kraftstoffeinspritzanlagen für Brennkraftmaschinen. Hier ist es von Vorteil, daß die Krümmung der Oberfläche, in der die Mikroventile angeordnet sind, der Brennraumgeometrie angepaßt werden kann. Eine örtlich variable Einspritz-Mengensteuerung, die eine optimale Verbrennung des Gemisches ermöglicht, ist durch Einzelansteuerung der Mikroventile möglich.

Weitere Einzelheiten und vorteilhafte Weiterbildungen der Ventilanordnung ergeben sich aus den Unteransprüchen in Verbindung mit der folgenden Beschreibung.

### Zeichnung

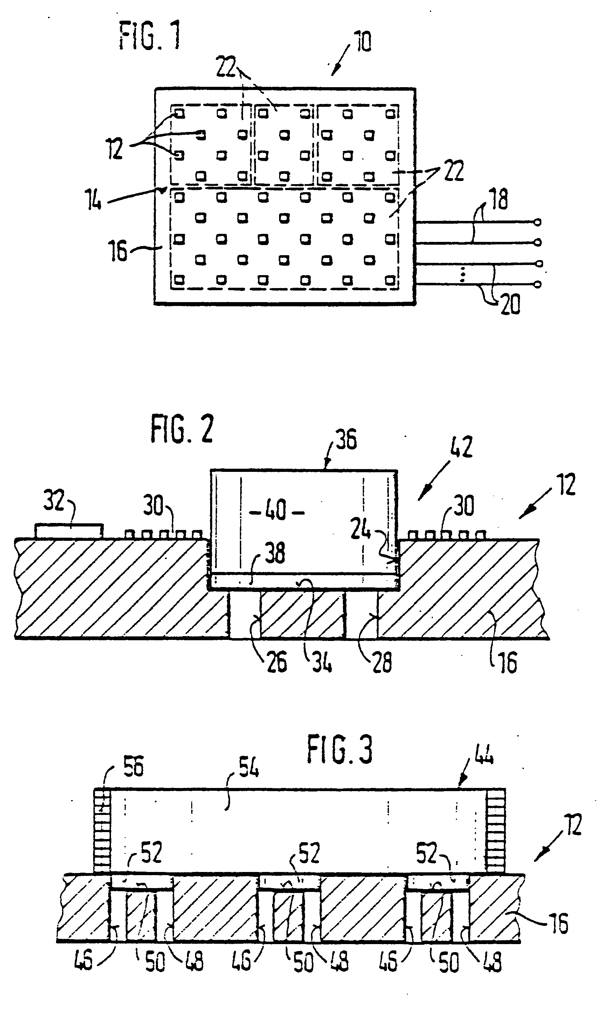

Figur 1 zeigt eine in Sektoren eingeteilte erfindungsgemäße Ventilanordnung, Figur 2 zeigt ein erstes Ausführungsbeispiel eines einzelnes Mikroventils der Ventilanordnung nach Figur 1 und Figur 3 zeigt ein zweites Ausführungsbeispiel eines Mikroventils der ventilanordnung nach Figur 1.

Beschreibung der Ausführungsbeispiele

Figur 1 zeigt eine Mikroventilanordnung 10, bei der Mikroventile 12 schachbrettartig in einer Ebene 14 auf einem Trägermaterial 16 angeordnet sind. Die Mikroventilanordnung 10 weist zwei Stromversorgungsleitungen 18 und mehrere Steuerleitungen 20 auf, wobei die Anzahl der Steuerleitungen 20 wenigstens gleich der Anzahl der Mikroventile 12 ist. In der Figur 1 sind beispielsweise vier Sektoren 22 durch unterbrochene Linien eingezeichnet.

Die Mikroventile 12 können auch in einem anderen Muster als dem in Figur 1 gezeigten schachbrettartigen Muster angeordnet sein. Das schachbrettartige Muster bietet jedoch den Vorteil einer besseren Flächenausnutzung.

Die Fläche 14 ist dem Anwendungfall anpaßbar. Neben der Anordnung in einer Ebene kann auch eine Krümmung der Fläche 14 vorteilhaft sein. Dies ist insbesondere bei der Ausgestaltung der Mikroventilanordnung 10 als Kraftstoffeinspritzventil einer Brennkraftmaschine vorteilhaft. In diesem Falle kann die Krümmung der Oberfläche der Brennraumgeometrie angepaßt werden. Zusätzlich zur zeitlichen Steuerung der Einspritz-Kraftstoffmenge ist somit auch eine örtlich variable Mengensteuerung möglich, da die einzelnen Mikroventile 12 über Steuerleitungen 20 unabhängig voneinander ansteuerbar sind. Der erforderliche Mengendurchsatz des strömenden Mediums wird dann erreicht, wenn wenigstens zehn Mikroventile 12 pro Quadratmillimeter angeordnet sind. Eine Zusammenfassung mehrerer, gemeinsam betätigter Mikroventile 12 in Sektoren 22 ist besonders zweckmäßig, da die Ausfallsicherheit sowie die in eine bestimmte Richtung abgespritzte Kraftstoffmenge steigen.

Figur 2 zeigt ein erstes Ausführungsbeispiel eines einzelnen Mikroventiles 12. In das Trägermaterial 16 sind durch oberflächenbehandlung eine Vertiefung 24, ein Einlaß 26 und ein Auslaß 28 sowie eine Leitungsstruktur 30 und eine Ansteuerschaltung 32 eingearbeitet. Zwischen Einlaß 26 und Auslaß 28 ist ein Ventilsitz 34 angeordnet. Das Gegenstück zum Ventilsitz 34 ist ein Schließglied 36. Das Schließglied 36 weist eine membranartige Dichtung 38 und einen metallenen Körper 40 auf. Als Dichtungsmaterial kommt vorzugsweise Teflon zur Anwendung. Ist eine hohe Bearbeitungsgenauigkeit der Overflächen gegeben, so kann auf die Dichtung 38 verzichtet werden. Die Leitungsstruktur 30 und der metallene Körper 40 mit der zugeordneten Dichtung 38 bilden einen Elektromagneten 42. Ein Stromflluß in der um den metallenen Körper 40 herum geschlossenen Leitungsstruktur 30 erzeugt ein Magnetfeld, das auf das Schließglied 36 eine Kraft ausübt, die eine Schließ- bzw. Öffnungsvewegung zur Folge hat. Der zum Betrieb des Elektromagneten 42 erforderliche Strom wird der Mikroventilanordnung 10 über die Stromversorgungsleitungen 18 zugeführt. Die Ansteuerung des Elektromagneten 42 erfolgt über eine Ansteuerschaltung 32. Die Ansteuerschaltung 32 kann in dem Trägermaterial 16 integriert werden wenn als Trägermaterial 16 ein Halbleiter-Werkstoff, vorzugsweise Silizium, vorgesehen ist. Die Ansteuerschaltung 32 erhält über eine Steuerleitung 20 ihr Eingangssignal. Wird als Trägermaterial 16 dagegen ein metallener Werkstoff verwendet, dann müssen die Leitungsstruktur 30 und die Ansteuerschaltung 32 gegen das metallene Trägermaterial 16 isoliert werden.

In Figur 2 ist der geschlossene Betriebszustand des Mikroventils 12 gezeigt. Einlaß 26 und Auslaß 28 sind räumlich getrennt durch die Zusammenwirkung der ebenen Dichtung 38 mit dem ebenen Ventilsitz 34. Alternativ ist es auch möglich, den Ventilsitz 34 und die gegenüberliegende Seite des Schließgliedes 36 zu einer kegelartigen Form auszubilden.

Figur 3 zeigt ein zweites Ausführungsbeispiel, bei dem das Mikroventil 12 mehrere Ein- und Auslässe aufweist. Die Ventilstruktur entsteht auch bei diesem Ausführungsbeispiel durch Oberflächenbearbeitung des Trägermaterials 16.

Drei Einlässe 46 und drei Auslässe 48 sind durch Ventilsitze 50 voneinander getrennt. Gegen die Ventilsitze 50 ist eine Dichtung 52 preßbar. Die Dichtung 52 steht in Verbindung mit einem metallenen Kern 54 eines Elektromagneten 44.

Bei diesem Ausführungsbeispiel tritt eine höhere Druckbelastung auf als bei einem einfacheren Mikroventil 12 gemäß Figur 2, das weniger Strömungskanäle aufweist. Der größere magnetische Fluß wird zweckmäßig von einer stromdurchflossenen (nicht zur Erfindung gehörenden) Drahtwicklung 56 bereitgestellt, die um den metallenen Kern 54 herum angeordnet ist. Eine Austeuerschaltung für den Elektromagneten 44 kann in das Trägermaterial 16 integriert werden, wenn es aus einem Halbleiter-Werkstoff besteht.

Wird metallener Werkstoff verwendet, so muß die Ansteuerschaltung gegen das Trägermaterial 16 isoliert werden.

Das Ausführungsbeispiel gemäß Figur 3 eignet sich besonders für das Betreiben der Mikroventilanordnung 10 nach Sektoren 22, da die Mikroventile 12 eines Sektors 22 gemeinsam betätigt werden. Anstelle einer gleichzeitigen Ansteuerung der einzelnen Ventile eines Sektors 22, ist lediglich ein Elektromagnet mit einer größeren, der Sektorfläche angepaßten Dichtungsfläche vorgesehen. Die in Figur 3 gezeigten Ein- und Auslässe 46, 48 entsprechen dann Ein- und Auslässen mehrerer mikroventile 12.

**Ansprüche**

1. Mikroventilanordnung (10) aus Mikroventilen (12) mit wenigstens einem Einlaß (26, 46) und Auslaß (28, 48) sowie einem dazwischengeschalteten Ventilsitz (34, 50), mit einem Schließglied (36), das gegen den Ventilsitz (34, 50) preßbar und mit Hilfe eines Elektromagneten (42, 44) bewegbar ist, dadurch gekennzeichnet, daß wenigstens zehn Mikroventile (12) pro Quadratmillimeter auf einer Oberfläche (14) angeordnet sind, daß Einlaß (26, 46), Auslaß (28, 48) und Ventilsitz (34, 50) durch Oberflächenbearbeitung eines Trägermaterials hergestellt sind und daß jedem Mikroventil (12) ein Elektromagnet (42, 44) zugeordnet ist, dessen Wicklung (30) durch Oberflächenbearbeitung des Trägermaterials (16) hergestellt ist.

2. Mikroventilanordnung nach Anspruch 1, dadurch gekennzeichnet, daß die Mikroventile (12) auf einer ebenen Fläche (14) angeordnet sind.

3. Mikroventilanordnung nach Anspruch 1, dadurch gekennzeichnet, daß die Mikroventile (12) auf einer gekrümmten Fläche (14) angeordnet sind.

4. Mikroventilanordnung nach einem der Ansprüche 1 bis 3, dadurch gekennzeichnet, daß das Schließglied (36) gegen einen ebenen Ventilsitz (34, 50) arbeitet.

5. Mikroventilanordnung nach einem der Ansprüche 1 bis 3, dadurch gekennzeichnet, daß das Schließglied (36) gegen einen kegelartigen Ventilsitz (34, 50) arbeitet.

6. Ventilanordnung nach Anspruch 4 oder 5. dadurch gekennzeichnet, daß das Schließglied (36) der Kern (40, 54) des Elektromagneten (42, 44) ist.

7. Mikroventilanordnung nach einem der Ansprüche 1 bis 6, dadurch gekennzeichnet, daß zwischen dem Ventilsitz (34, 50) und dem metallenen Kern (40, 54) des Elektromagneten (40, 44) eine Dichtung (38, 52) vorgesehen ist.

8. Mikroventilanordnung nach Anspruch 7, dadurch gekennzeichnet, daß die Dichtung (38, 52) aus dem Werkstoff Teflon hergestellt ist.

9. Mikroventilanordnung nach einem der Ansprüche 1 bis 8, dadurch gekennzeichnet, daß das Trägermaterial (16) ein Halbleiter-Werkstoff ist.

10. Mikroventilanordnung nach Anspruch 9, dadurch gekennzeichnet, daß als Halbleiter-Werkstoff Silizium verwendet wird.

11. Mikroventilanordnung nach einem der Ansprüche 1 bis 10. dadurch gekennzeichnet, daß die Mikroventile (12) schachbrettartig angeordnet sind.

12. Mikroventilanordnung nach einem der Ansprüche 1 bis 11, dadurch gekennzeichnet, daß eine Ansteuerschaltung (32) des Elektromagneten (42, 44) zum Elektromagneten (42, 44) benachbart angeordnet ist.

13. Mikroventilanordnung nach einem der Ansprüche 9 bis 12, dadurch gekennzeichnet, daß die Ansteuerschaltung (32) des Elektromagneten (42, 44) in dem Trägermaterial (16) integriert dem Elektromagneten (42, 44) benachbart angeordnet ist.

14. Mikroventilanordnung nach einem der Ansprüche 1 bis 13, gekennzeichnet durch die Verwendung der Mikroventilanordnung (10) in einer pneumatischen Bremsanlage eines Kraftfahrzeugs.

15. Mikroventilanordnung nach einem der Ansprüche 1 bis 13, gekennzeichnet durch die Verwendung als Kraftstoff-Einspritzventil für Brennkraftmaschinen.

16. Verfahren zum Betreiben der Mikroventilanordnung (10) nach einem der Ansprüche 1 bis 15, dadurch gekennzeichnet, daß jedes eizelne Mikroventil (12) in einer vorgegebenen zeitlichen Folge über Steuerleitung (20) angesteuert wird.

17. Verfahren zum Betreiben der Mikroventilanordnung (10) nach einem der Ansprüche 1 bis 15, dadurch gekennzeichnet, daß die Mikroventilanordnung (10) in Sektoren (22) eingeteilt ist und einzelne Sektoren über Steuerleitungen (20) angesteuert werden.

## Claims

1. Micro-valve arrangement (10) of micro-valves (12) with at least one inlet (26, 46) and outlet (28, 48) as well as an interposed valve seating (34, 50), with a closing element (36), which can be pressed against the valve seating (34, 50) and can be moved with the aid of an electromagnet (42, 44), characterised in that at least ten micro-valves (12) are arranged per square millimetre on a surface (14), in that inlet (26, 46), outlet (28, 48) and valve seating (34, 50) are produced by surface treatment of a support material and in that each micro-valve (12) is assigned an electromagnet (42, 44), the winding (30) of which is produced by surface treatment of the support material (16).

2. Micro-valve arrangement according to Claim 1, characterised in that the micro-valves (12) are arranged on a plane area (14).

3. Micro-valve arrangement according to Claim 1, characterised in that the micro-valves (12) are arranged on a curved area (14).

4. Micro-valve arrangement according to one of Claims 1 to 3, characterised in that the closing element (36) operates against a plane valve seating (34, 50).

5. Micro-valve arrangement according to one of Claims 1 to 3, characterised in that the closing element (36) operates against a cone-like valve seating (34, 50).

6. Valve arrangement according to Claim 4 or 5, characterised in that the closing element (36) is the core (40, 54) of the electromagnet (42, 44).

7. Micro-valve arrangement according to one of Claims 1 to 6, characterised in that a seal (38, 52) is provided between the valve seating (34, 50) and the metallic core (40, 54) of the electromagnet (40, 44).

8. Micro-valve arrangement according to Claim 7, characterised in that the seal (38, 52) is produced from the material Teflon.

9. Micro-valve arrangement according to one of Claims 1 to 8, characterised in that the support material (16) is a semiconductor material.

10. Micro-valve arrangement according to Claim 9, characterised in that silicon is used as semiconductor material.

11. Micro-valve arrangement according to one of Claims 1 to 10, characterised in that the micro-valves (12) are arranged in checkerboard fashion.

12. Micro-valve arrangement according to one of Claims 1 to 11, characterised in that an activation circuit (32) of the electromagnet (42, 44) is arranged alongside the electromagnet (42, 44).

13. Micro-valve arrangement according to one of Claims 9 to 12, characterised in that the activation circuit (32) of the electromagnet (42, 44), integrated in the support material (16), is arranged alongside the electromagnet (42, 44).

14. Micro-valve arrangement according to one of Claims 1 to 13, characterised by use of the micro-valve arrangement (10) in a pneumatic brake system of a motor vehicle.

15. Micro-valve arrangement according to one of Claims 1 to 13, characterised by use as fuel injection valve for internal-combustion engines.

16. Method of operating the micro-valve arrangement (10) according to one of Claims 1 to 15, characterised in that each individual micro-valve (12) is activated in a given the sequence via control line (20).

17. Method of operating the micro-valve arrangement (10) according to one of Claims 1 to 15, characterised in that the micro-valve arrangement (10) is divided into sectors (22) and individual sectors are activated via control lines (20).

## Revendications

1. Agencement (10) de microsoupapes (12) avec au moins une admission (26, 46) et un échappement (28, 48) ainsi qu'avec un siège de soupape (34, 50) entre admission et échappement, avec un organe de fermeture (36) qui est susceptible d'être pressé contre le siège de soupape (34, 50) et d'être déplacé à l'aide d'un électro-aimant (42, 44), agencement de microsoupapes caractérisé en ce qu'au moins dix microsoupapes (12) par millimètre carré sont disposées sur une surface (14), en ce que l'admission (26, 46), l'échappement (28, 48), et le siège de soupape (34, 50) sont réalisés par usinage superficiel d'un matériau porteur, et en ce qu'à chaque microsoupape (12) est associé un électro-aimant (42, 44) dont l'enroulement (30) est réalisé par traitement superficiel du matériau porteur (16).

2. Agencement de microsoupapes selon la revendication 1, caractérisé en ce que les microsoupapes (12) sont disposées sur une surface plane (14).

3. Agencement de microsoupapes selon la revendication 1, caractérisé en ce que les microsoupapes (12) sont disposées sur une surface courbée (14).

4. Agencement de microsoupapes selon une des revendications 1 à 3, caractérisé en ce que l'organe de fermeture (36) fonctionne contre un siège de soupape (34, 50) plan.

5. Agencement de microsoupapes selon une des revendications 1 à 3, caractérisé en ce que l'organe de fermeture (36) fonctionne contre un siège de soupape (34, 50) conique.

6. Agencement de microsoupapes selon la revendication 4 ou la revendication 5, caractérisé en ce que l'organe de fermeture (36) est le noyau (40, 54) de l'électro-aimant (42, 44).

7. Agencement de microsoupapes selon une des revendications 1 à 6, caractérisé en ce qu'entre le siège de soupape (34, 50) et le noyau métallique (40, 54) de l'électro-aimant (40, 44) il est prévu un étanchement (38, 52).

8. Agencement de microsoupapes selon la revendication 7, caractérisé en ce que l'étanchement (38, 52) est réalisé en téflon.

9. Agencement de microsoupapes selon une des revendications 1 à 8, caractérisé en ce que le matériau porteur (16) est un matériau semi-conducteur.

10. Agencement de microsoupapes selon la revendication 9, caractérisé en ce que du silicium est utilisé en tant que matériau semi-conducteur.

11. Agencement de microsoupapes selon une des revendications 1 à 10, caractérisé en ce que les microsoupapes (12) sont disposées en échiquier.

12. Agencement de microsoupapes selon une des revendications 1 à 11, caractérisé en ce qu'un circuit de commande (32) de l'électro-aimant (42, 44) est disposé au voisinage de l'électro-aimant (42, 44).

13. Agencement de microsoupapes selon une des revendications 9 à 12, caractérisé en ce que le circuit de commande (32) de l'électro-aimant (42, 44) est intégré dans le matériau porteur (16) et disposé au voisinage de l'électro-aimant (42, 44).

14. Agencement de microsoupapes selon une des revendications 1 à 13, caractérisé en ce que cet agencement de microsoupapes (10) est mis en oeuvre dans une installation de freinage pneumatique d'un véhicule automobile.

15. Agencement de microsoupapes selon une des revendications 1 à 13, caractérisé en ce qu'il est mis en oeuvre, en tant que soupapes d'injection de carburant pour des moteurs à combustion interne.

16. Procédé pour l'exploitation de l'agencement de microsoupapes (10) selon une des revendications 1 à 15, procédé caractérisé en ce que chaque microsoupape individuelle (12) est commandée en une succession prédéfinie dans le temps par l'intermédiaire d'une liaison de commande (20).

17. Procédé pour l'exploitation de l'agencement de microsoupapes (10) selon une des revendications 1 à 15, procédé caractérisé en ce que l'agencement de microsoupapes (10) est divisé en secteurs (22) et que les secteurs individuels sont commandés par l'intermédiaire de liaisons de commande (20).

FIG. 1

FIG. 2

FIG. 3